Europäisches Patentamt

European Patent Office

Office européen des brevets

(19)

(11) Numéro de publication : **0 100 267**
**B1**

(12) # FASCICULE DE BREVET EUROPÉEN

(45) Date de publication du fascicule du brevet :
01.10.86

(51) Int. Cl.⁴ : **B 01 J 23/56**, B 01 J 23/89,
B 01 D 53/36

(21) Numéro de dépôt : 83401456.5

(22) Date de dépôt : 13.07.83

---

(54) **Procédé de fabrication de catalyseurs pour le traitement des gaz d'échappement des moteurs à combustion interne.**

(30) Priorité : 26.07.82 FR 8212969

(43) Date de publication de la demande :
08.02.84 Bulletin 84/06

(45) Mention de la délivrance du brevet :
01.10.86 Bulletin 86/40

(84) Etats contractants désignés :
CH DE FR GB IT LI NL SE

(56) Documents cités :
EP-A- 0 027 069
EP-A- 0 054 472
FR-A- 2 297 903
FR-A- 2 430 795
US-A- 4 140 655
US-A- 4 153 579
Le dossier contient des informations techniques présentées postérieurement au dépôt de la demande et ne figurant pas dans le présent fascicule.

(73) Titulaire : Société Française des Produits pour Catalyse "PRO-CATALYSE"
1-4, avenue de Bois Préau
F-92500 Rueil-Malmaison (FR)

(72) Inventeur : Blanchard, Gilbert
5 Allée des Acacias Le Plessis Belleville
F-60330 Lagny-le-Sec (FR)
Inventeur : Brunelle, Jean-Pierre
Rés. Fontaine Saint-Martin rue de la Planchette
F-95350 Saint-Brice-sous-Forêt (FR)
Inventeur : Prigent, Michel
11, rue des Marronniers
F-92500 Rueil-Malmaison (FR)

(74) Mandataire : Savina, Jacques
RHONE-POULENC INTERSERVICES Service Brevets
Chimie 25, quai Paul Doumer
F-92408 Courbevoie Cédex (FR)

EP 0 100 267 B1

Jouve, 18, rue St-Denis, 75001 Paris, France

0 100 267

**Description**

La présente invention a pour objet un procédé de fabrication de catalyseurs pour le traitement des gaz d'échappement des moteurs à combustion interne.

La présente invention a plus particulièrement trait à un procédé de fabrication de catalyseur pour le traitement des gaz d'échappement des moteurs à combustion interne opérant l'oxydation du monoxyde de carbone et des hydrocarbures présents dans les gaz d'échappement éventuellement simultanément avec la réduction des oxydes d'azote présents dans ces gaz.

Généralement, les catalyseurs convenant à l'oxydation et éventuellement à la réduction catalytique des constituants contenus dans les gaz d'échappement des moteurs à combustion interne comportent un support revêtu et/ou imprégné d'au moins un métal précieux du groupe du platine tels que le platine, le rhodium, le ruthénium, le palladium, l'iridium et au moins un métal de base, ces métaux de base étant généralement choisis parmi : le cobalt, le zinc, le manganèse, le nickel, le tungstène, le cérium, le fer, le cuivre, le néodyme, le praséodyme, le rhénium, l'yttrium, le magnésium, le chrome, le zirconium, le molybdène, le lanthane, l'étain, le calcium, le strontium et le baryum.

Ces catalyseurs sont généralement préparés par les méthodes courantes soit par imprégnation du support soit par apport des métaux de la phase active lors de la fabrication du support. Généralement on opère par imprégnation du support au moyen de solutions de composés minéraux ou organiques des métaux que l'on désire introduire.

Ainsi, selon la demande de brevet européen n° 27 069 au nom de la Société Française des Produits pour Catalyse : PRO-CATALYSE, il est connu de fabriquer des catalyseurs multifonctionnels pour le traitement des gaz d'échappement des moteurs à combustion interne par imprégnation successive du support avec une solution contenant des composés du fer et du cérium, puis avec une solution contenant les composés des métaux précieux du groupe du platine que l'on désire introduire.

Le document FR-A-2 297 908 divulgue un procédé de fabrication de catalyseurs contenant un support poreux imprégné d'une partie métallique catalytiquement active, constituée de Pt, Pd, Si et éventuellement de Mn. Selon ce procédé, on imprègne des billes d'alumine active par une première solution d'imprégnation contenant du chlorure de Pd et un sol de silice (donnant ultérieurement le silicium), puis on sèche et on calcine à 500 °C les billes ainsi imprégnées. Ces billes sont alors imprégnées par une deuxième solution d'imprégnation contenant de l'acide chloroplatinique, puis après séchage, elles sont calcinées à 500 °C pendant quatre heures dans un courant d'air sec et enfin à 500 °C pendant deux heures sous atmosphère d'hydrogène. Lorsque ce catalyseur contient du manganèse, ce dernier est préalablement déposé par imprégnation des billes d'alumine par une solution de chlorure de Mn.

Le FR-A-2 430 795 divulgue un procédé de préparation de catalyseurs pour le traitement des gaz d'échappement des moteurs à combustion interne, ledit catalyseur contenant du cérium, du fer, du platine, du palladium, du rhodium et éventuellement du lanthane, déposés sur un support minéral réfractaire. Selon ce procédé, on imprègne le support par une solution aqueuse acide contenant les sels de Ce, Fe, La, Pt et Pd, puis après séchage du support imprégné, on calcine à l'air entre 300 et 1 100 °C, par exemple 550 °C, pendant trois heures. On dépose seulement ensuite le rhodium, par imprégnation à l'aide d'une solution aqueuse d'un sel de rhodium. Après séchage du produit obtenu, celui-ci est soumis à un traitement d'activation consistant en une calcination en atmosphère réductrice entre 250 °C et 500 °C.

La demanderesse a trouvé que, dans le cas où les catalyseurs contiennent du palladium, il s'avère particulièrement avantageux d'opérer l'introduction du palladium sur le support avant d'opérer celle des autres métaux précieux de la mine du platine, cette introduction se faisant de préférence simultanément avec l'introduction des métaux de base.

La présente invention concerne en effet un procédé de préparation de catalyseurs pour le traitement des gaz d'échappement des moteurs à combustion interne contenant un support revêtu et/ou imprégné d'au moins deux métaux du groupe du platine dont le palladium et d'au moins un métal de base choisi parmi au moins un des métaux suivants, le silicium étant exclu : le cobalt, le zinc, le manganèse, le nickel, le tungstène, le cérium, le fer, le cuivre, le néodyme, le praséodyme, le rhénium, le chrome, le zirconium, le lanthane, l'étain, le calcium, le strontium, le baryum, l'yttrium, le magnésium, le titane, le gallium, caractérisé en ce que :

— dans une première étape, on introduit, simultanément ou non, le palladium et les métaux de base,
— dans une deuxième étape, on active,
— dans une troisième étape, on introduit les métaux précieux du groupe du platine autres que le palladium,
— dans une quatrième étape, on active le catalyseur de préférence en atmosphère réductrice.

Le support mis en œuvre selon le procédé de l'intervention peut être soit sous forme particulaire, soit sous forme d'une couche d'oxyde recouvrant un substrat métallique ou céramique.

Les supports particulaires que l'on peut utiliser sont notamment ceux choisis parmi : la silice,

2

l'alumine, les alumino-silicates ou les oxydes mixtes comprenant par exemple de l'alumine associée avec de la silice, de l'oxyde de zirconium, de l'oxyde de cérium et/ou de l'oxyde de titane.

Selon un mode de mise en œuvre préféré de l'invention, on utilise un support particulaire à base d'alumine. Ce support présente de préférence une surface spécifique comprise entre 25 et 250 m²/g et plus particulièrement comprise entre 70 et 150 m²/g. Il présente un volume poreux total de préférence compris entre 0,5 et 2 cm³/g, et plus particulièrement compris entre 0,8 et 1,7 cm³/g. Il possède de préférence une macroporosité telle que le volume poreux de pore dont le diamètre est supérieur à 1 000 Å est compris entre environ 0,05 et 0,6 cm³/g et plus particulièrement entre 0,2 et 0,5 cm³/g.

De tels supports peuvent notamment avoir été fabriqués à partir de l'alumine active obtenus selon le procédé décrit dans le brevet américain n° 2 915 365 et agglomérés selon le procédé décrit dans le brevet américain n° 2 881 051. Ils peuvent également avoir été fabriqués par autoclavage en milieu neutre ou acide des agglomérés précédents, séchage et calcination notamment tels que décrits dans les brevets français n° 1 449 904 et 1 386 364.

Les supports mis en œuvre peuvent également avoir été obtenus selon le procédé décrit dans la demande de brevet français n° 7 723 880 publiée sous le n° 2 339 276.

Les supports d'alumine mis en œuvre peuvent également avoir été fabriqués selon le procédé décrit dans les demandes de brevet européen n° 15 801 et n° 55 164 au nom de Rhône-Poulenc.

D'une manière générale, les supports à base de particules d'alumine mis en œuvre selon l'invention peuvent avoir été traités, ainsi qu'il est bien connu de l'homme de l'art, par des agents porogènes tels que ceux à base de cellulose, naphtaline, gomme naturelle, polymères synthétiques, etc... afin de leur conférer les propriétés de porosité désirées.

Selon le procédé de l'invention, on peut également mettre en œuvre des supports constitués par un ou plusieurs oxydes recouvrant un substrat métallique ou céramique ; ledit substrat étant de préférence sous forme d'une structure inerte et rigide en nid d'abeille comprenant des canaux ou conduits. De tels supports sont bien connus de l'homme de l'art et ont été largement décrits dans la littérature, les oxydes étant de préférence employés sous forme d'une pellicule ou d'un revêtement appliqué sur le substrat.

Les oxydes constituant le revêtement sont notamment choisis parmi le groupe comportant les oxydes d'aluminium, magnésium, calcium, strontium, baryum, scandium, yttrium, lanthanides, gallium, silicium, titane, zirconium, hafnium, thorium, niobium, tantale, chrome, fer, tungstène, manganèse, étain. On utilise de préférence un revêtement en oxyde d'aluminium.

Les substrats métalliques utilisés sont notamment ceux obtenus à partir d'alliages de fer, de nickel, de chrome, ou ceux obtenus à partir de fer, de chrome, d'aluminium et de cobalt tels que ceux connus sous la marque « KANTAL » ou ceux obtenus à partir d'alliages de fer, de chrome, d'aluminium et d'yttrium et connus sous la marque « FECRALLOY ». Le métal peut aussi être de l'acier carboné ou de la fonte simple.

On peut avantageusement traiter les substrats métalliques à base d'aluminium par chauffage en atmosphère oxydante dans des conditions de durée et de température qui permettent de former, à partir de l'aluminium contenu dans l'alliage, une couche superficielle d'oxyde d'aluminium. Dans le cas des aciers carbonés ou de la fonte, on peut également les pré-traiter par recuit du fer ou de l'acier recouvert d'une couche d'aluminium pour obtenir un revêtement d'une couche de diffusion aluminium/fer.

Les substrats en matière céramique utilisés sont notamment ceux comportant comme matière principale : la cordiérite, l'alumine, la mullite, la zircone, la zircommulite, le titanate de baryum, la porcelaine, l'oxyde de thorium, l'oxyde de magnésium, la stéatite, les carbures de bore ou du silicium. Selon un mode de mise en œuvre préféré de l'invention, on peut obtenir le revêtement en oxyde d'aluminium de ces substrats céramiques ou métalliques par application d'hydrate d'alumine puis calcination ou par dépôt d'un sel d'aluminium puis calcination ou par application d'une couche d'alumine active plus calcination.

La structure cellulaire en nid d'abeille peut être de forme hexagonale, tétragonale, triangulaire ou ondulée. Elle doit permettre le passage de gaz dans les canaux ou conduits formés lors de leur fabrication par extrusion, laminage, solidification d'éléments en forme de feuille, etc...

Par ailleurs, les supports mis en œuvre selon le procédé de l'invention sont avantageusement traités de façon à leur conférer une bonne stabilité thermique au cours du temps. Ces traitements, bien connus de l'homme de l'art, consistent notamment dans une stabilisation de la particule d'alumine ou du revêtement en oxyde d'aluminium par les métaux alcalino-terreux, la silice et/ou les terres rares.

Les supports stabilisés décrits dans les brevets français n° 2 257 335 et 2 290 950 au nom de Rhône-Poulenc Industries conviennent aux fins de l'invention.

Les métaux du groupe du platine que l'on peut mettre en œuvre selon l'invention sont choisis parmi : le platine, le rhodium, le ruthénium, le palladium et l'iridium ; selon le procédé de l'invention, on met en œuvre le palladium et au moins un autre métal du groupe du platine.

Selon un mode de mise en œuvre préféré de l'invention, on utilise le palladium et au moins un métal choisi parmi le platine, l'iridium et le rhodium.

Dans les catalyseurs de l'invention, la teneur totale en métal du groupe du platine varie généralement entre environ 0,02 et 0,5 % en poids par rapport au support. Selon le mode de mise en œuvre préféré de l'invention la teneur en platine et palladium du catalyseur varie généralement entre environ 0,02 et 0,4 % en poids par rapport au support et de préférence entre 0,04 et 0,25 % en poids ; celle du métal du groupe constitué par l'iridium et le rhodium varie généralement entre environ 0 et 0,1 % en poids et de préférence entre environ 0,002 et 0,02 % en poids par rapport au support.

Le rapport entre le poids de platine et de palladium et le poids d'iridium et/ou de rhodium est de préférence supérieur à 4 et plus particulièrement supérieur à 8.

Dans les catalyseurs selon l'invention le ou les métaux du groupe du platine sont associés à un ou plusieurs métaux de base. Ces métaux de base sont choisis parmi au moins un des métaux suivants : le cobalt, le zinc, le manganèse, le nickel, le tungstène, le cérium, le fer, le cuivre, le néodyme, le praséodyme, le rhénium, le chrome, le zirconium, le lanthane, l'étain, le calcium, le strontium, le baryum, l'yttrium, le magnésium, le titane, le gallium.

On met de préférence en œuvre les compositions comportant les métaux de base suivants :

— le fer et/ou le cérium,
— le manganèse et le cérium et/ou le fer,
— le cérium et le fer et le gallium et/ou l'yttrium,
— le cérium et le fer et le baryum et/ou le magnésium et/ou l'yttrium,
— le lanthane et/ou le néodyme.

La teneur totale en métal de base rapportée au support est généralement comprise entre 0,1 et 11 % en poids.

Selon le premier mode de réalisation préféré de l'invention, lorsque l'on met en œuvre comme métaux de base le fer et/ou le cérium, la teneur en fer est comprise entre environ 0,1 et 3,5 % en poids par rapport au support et plus particulièrement entre 0,5 et 2 % ; la teneur en cérium est comprise entre environ 0,3 et 7,5 % et de préférence entre 0,5 et 5,5 % en poids par rapport au support.

Selon un deuxième mode de réalisation préféré de l'invention, lorsque les métaux de base sont constitués par le manganèse et le cérium et/ou le fer, la teneur totale en cérium et/ou fer est comprise entre 0,1 et 11 % en poids rapporté au support et de préférence entre 0,5 et 7,5 % ; la teneur en manganèse est comprise entre 0,1 et 4 % et de préférence entre 0,1 et 2 % ; la quantité de manganèse et de fer et/ou de cérium est inférieure à 15 % et de préférence à 9,5 % en poids rapporté au support.

Selon un troisième mode de réalisation préféré lorsque les métaux de base sont constitués par le cérium, le fer, le gallium et/ou l'yttrium, la teneur totale en cérium et fer des catalyseurs est comprise entre environ 0,1 et 11 % en poids rapporté au support et de préférence entre 0,5 et 7,5 % ; la teneur en gallium est comprise entre 0,01 et environ 10 % en poids et de préférence entre 0,01 et 2 % ; la teneur en yttrium est comprise entre 0,01 et 10 % et de préférence entre 0,01 et 2 %.

Selon un quatrième mode de réalisation préféré, lorsque les métaux de base sont constitués par le cérium, le fer, le baryum et/ou le magnésium et/ou l'yttrium, la teneur totale en cérium et fer des catalyseurs est comprise entre 0,1 et 11 % en poids par rapport au support et de préférence entre 0,5 et 7,5 %, la teneur en baryum et/ou magnésium et/ou yttrium est comprise entre 0,01 et 3,5 % et de préférence entre 0,01 et 2 %.

Selon un cinquième mode de réalisation préféré, lorsque les métaux de base sont constitués par le lanthane et/ou le néodyme, la teneur en lanthane et/ou néodyme est comprise entre 0,1 et 11 % et plus particulièrement entre 0,5 et 7,5 %.

Selon le procédé de l'invention, dans une première étape, on introduit le palladium et les métaux de base dans le support.

Le palladium et les métaux de base peuvent être introduits dans le support par toute méthode et, en particulier, imprégnation, co-gélification, co-précipitation, etc... On opère de préférence par imprégnation du support avec une solution contenant des composés du palladium et des métaux de base. Comme composés on citera tous les sels solubles des métaux considérés. Comme composés du palladium on mettra notamment en œuvre le chlorure de palladium, le nitrate de palladium, le dichlorure de palladium II tétramine, etc... Dans le mode de mise en œuvre préféré de l'invention, les sels de fer et de cérium mis en œuvre seront notamment choisis parmi le nitrate ferrique, le citrate de fer ammoniacal, le chlorure ferrique, le nitrate céreux, l'acétate céreux, le chlorure céreux et le nitrate cérique ammoniacal.

Selon la deuxième étape du procédé de l'invention, on active le support revêtu et/ou imprégné provenant de la première étape, la température d'activation est comprise entre environ 120 et 800 °C. Au sens de l'invention, on entend par activation, un traitement thermique constitué d'un séchage suivi éventuellement d'une calcination.

Dans une troisième étape, on introduit les métaux précieux du groupe du platine autres que le palladium. Ces métaux sont introduits par imprégnation avec les composés des métaux précieux. Dans le mode de mise en œuvre préféré, on utilise : le trichlorure de rhodium hydraté, l'acide chloroplatinique, le dichlorure de rhodium III chloropentamine et le dichlorure de platine II tétramine, l'acide bromo-platinique, le nitrate de rhodium et l'acide hexachloro-iridique.

Ainsi qu'il est bien connu de l'homme de l'art, la profondeur d'imprégnation peut être avantageusement réglée par l'utilisation d'ajout d'une certaine quantité d'un acide minéral ou organique à la solution des métaux précieux. On utilise couramment les acides nitrique, phosphorique, chlorhydrique et fluorhydrique ou les acides acétique, citrique, oxalique, etc...

Dans une quatrième étape du procédé de l'invention, on active le catalyseur de préférence en atmosphère réductrice. L'activation est de préférence effectuée à une température comprise entre 300 et 800 °C pendant quelques heures ; comme agent réducteur on peut notamment utiliser l'hydrogène, l'oxyde de carbone et/ou l'hydrogène sulfuré.

Les catalyseurs selon l'invention ainsi préparés possèdent une stabilité au cours du temps considérablement améliorée pour éliminer les composés nocifs contenus dans les gaz d'échappement et, en particulier, l'oxyde de carbone, les hydrocarbures imbrûlés, ainsi qu'éventuellement les oxydes d'azote présents dans ceux-ci.

Selon une variante du procédé de l'invention, il peut être avantageux de n'introduire au cours de la première étape qu'au moins la moitié du palladium total contenu dans le catalyseur ; dans ce cas, la partie restante est introduite lors de la troisième étape avec les autres métaux précieux.

Les exemples ci-après illustrent l'invention sans en limiter la portée.

### Exemple 1

Préparation d'un catalyseur (A) de l'art antérieur

On prépare 100 g de billes d'alumine de structure gamma selon les procédés décrits dans les brevets français n° 1 449 904 et 1 386 364 par autoclavage en présence d'acide d'agglomérés d'alumine active, séchage et calcination.

Les billes d'alumine présentent une surface spécifique de 100 $m^2$/g, un volume poreux total de 0,90 $cm^3$/g et un volume de 0,40 $cm^3$/g constitué par des macropores ayant un diamètre supérieur à 1 000 Å.

Ces billes sont imprégnées par 90 $cm^3$ d'une solution aqueuse de nitrate de fer et de nitrate céreux contenant 1,5 g de fer et 4,0 g de cérium.

Après 30 minutes de contact, les billes sont séchées à 150 °C puis calcinées sous air à 400 °C pendant 3 heures.

Elles sont ensuite imprégnées par 90 $cm^3$ d'une solution d'acide chloroplatinique, de trichlorure de rhodium hydraté et de nitrate de palladium contenant 150 mg de platine, 7,3 mg de rhodium et 50 mg de palladium.

Après 30 minutes de contact, les billes sont séchées à 150 °C puis calcinées à 300 °C pendant 3 heures dans un courant d'air circulant à 200 litres par heure.

Le catalyseur (A) ainsi préparé contient en poids rapporté au support 0,150 % de platine ; 0,007 3 % de rhodium ; 0,050 % de palladium, 1,5 % de fer et 4,0 % de cérium.

### Exemple 2

Préparation d'un catalyseur (B) de l'art antérieur

100 g de billes tel que décrit à l'exemple 1 sont imprégnées par 90 $cm^3$ d'une solution aqueuse de nitrate de fer, de nitrate de cérium et de nitrate de manganèse contenant 1,0 g de fer, 4 g de cérium et 1 g de manganèse.

Après 30 minutes de contact, les billes sont séchées à 150 °C puis calcinées sous air à 400 °C pendant 3 heures. Elles sont ensuite imprégnées par 90 $cm^3$ d'une solution d'acide chloroplatinique de chlorure de palladium et de trichlorure de rhodium hydraté contenant 75 mg de platine, 75 mg de palladium et 7,3 mg de rhodium.

Le catalyseur est ensuite traité comme à l'exemple 1.

Le catalyseur (B) ainsi préparé contient en poids rapporté au support 0,075 % de platine, 0,075 % de palladium, 0,007 3 % de rhodium, 1 % de fer, 4 % de cérium et 1 % de manganèse.

### Exemple 3

Préparation d'un catalyseur (C) de l'art antérieur

On prépare 100 g de billes d'alumine selon le procédé décrit dans la demande de brevet français n° 7 904 810 publiée sous le n° 2 449 474.

Ces billes présentent une surface spécifique de 100 $m^2$/g, un volume poreux total de 1,20 $cm^3$/g et un volume de 0,45 $cm^3$/g constitué par des macropores ayant un diamètre supérieur à 1 000 Å.

Le mode opératoire utilisé pour l'imprégnation est semblable à celui décrit dans l'exemple 2 ci-dessus ; on utilise cette fois 120 $cm^3$ d'une solution aqueuse de nitrate ferrique, de nitrate cuivrique et de nitrate céreux contenant 2 g de fer, 0,5 g de cuivre et 4,0 g de cérium, puis 120 $cm^3$ d'une solution d'acide chloroplatinique, de chlorure de palladium et de trichlorure de rhodium hydraté contenant 100 mg de platine, 50 mg de palladium et 7,3 mg de rhodium.

Le catalyseur (C) ainsi préparé contient en poids rapporté au support 0,100 % de platine, 0,050 % de palladium, 0,007 3 % de rhodium, 2 % de fer, 0,5 % de cuivre et 4,0 % de cérium.

# 0 100 267

## Exemple 4

**Préparation d'un catalyseur (D) selon l'invention**

100 g de billes d'alumine tel que décrit à l'exemple 3 sont imprégnées par 120 cm³ d'une solution aqueuse de nitrate de fer, de nitrate de cérium, de nitrate palladium et de nitrate de manganèse contenant 1,0 g de fer, 4 g de cérium, 75 mg de palladium et 1 g de manganèse.

Après 30 minutes de contact, les billes sont séchées à 150 °C puis calcinées sous air à 400 °C pendant 3 heures.

Elles sont ensuite imprégnées par 120 cm³ d'une solution d'acide chloroplatinique et de trichlorure de rhodium hydraté contenant 75 mg de platine et 7,3 mg de rhodium.

Après 30 mn de contact, les billes sont séchées à 150 °C puis activées à 300 °C pendant 3 h dans un courant d'air circulant à 200 litres par heure.

Le catalyseur (D) ainsi préparé contient en poids rapporté au support 0,075 % de platine, 0,075 % de palladium, 0,007 3 % de rhodium, 1 % de fer, 4 % de cérium et 1 % de manganèse.

## Exemple 5

**Préparation d'un catalyseur (E) selon l'invention**

100 g de billes tel que décrit à l'exemple 3 sont imprégnées par 120 cm³ d'une solution aqueuse de nitrate ferrique, de nitrate céreux, de nitrate de baryum et de chlorure de palladium contenant 1,5 g de fer, 4,0 g de cérium, 2,0 g de baryum et 50 mg de palladium.

Après 30 minutes de contact, les billes sont séchées à 150 °C puis calcinées sous air à 400 °C pendant 3 heures. Elles sont ensuite imprégnées par 120 cm³ d'une solution d'acide chloroplatinique et de trichlorure de rhodium hydraté contenant 100 mg de platine et 7,3 mg de rhodium. Après 30 minutes de contact, les billes sont séchées à 150 °C puis activées à 300 °C pendant 3 heures dans un courant d'hydrogène circulant à 200 litres par heure.

Le catalyseur (E) ainsi préparé contient en poids rapporté au support 0,100 % de platine, 0,050 % de palladium, 0,007 3 % de rhodium, 1,5 % de fer, 4 % de cérium et 2 % de baryum.

## Exemple 6

**Préparation d'un catalyseur (F) selon l'invention**

100 g de billes tel que décrit à l'exemple 3 sont imprégnées d'une part par 120 cm³ d'une solution aqueuse de nitrate ferrique de nitrate céreux, de chlorure de palladium, de nitrate d'yttrium et de nitrate de baryum contenant 1,5 g de fer, 3,50 g de cérium, 75 mg de palladium, 0,2 g d'yttrium, 0,5 g de baryum et, d'autre part, par 120 cm³ d'une solution aqueuse d'acide hexachloroplatinique et de trichlorure de rhodium contenant 65 mg de platine et 5 mg de rhodium.

Le catalyseur (F) est traité comme à l'exemple 5.

Le catalyseur (F) ainsi préparé contient en poids rapporté au support 0,065 % de platine, 0,075 % de palladium, 0,005 % de rhodium, 1,5 % de fer, 3,50 % de cérium, 0,2 % d'yttrium et 0,5 % de baryum.

## Exemple 7

**Préparation d'un catalyseur (G) selon l'invention**

On prépare une suspension dans l'eau d'alumine convenant au revêtement d'une structure monolithe métallique connue sous la marque Fecralloy.

Le monolithe de 1,7 litre est plongé dans la suspension à pH = 3,5 contenant 30 % en poids d'alumine. Le support précédemment cité est égoutté et séché pour que les canaux soient vidés, puis il est calciné à 600 °C durant 3 heures. Le monolithe ainsi revêtu est immergé dans une solution aqueuse de nitrate ferrique, de nitrate de cérium et de nitrate de palladium pendant 30 minutes, puis il est égoutté et séché à 150 °C et calciné à 400 °C durant 3 heures. Les concentrations en nitrate ferrique, en nitrate de cérium et en nitrate de palladium dans la solution sont telles que, après immersion et calcination, le monolithe contient 0,8 % en poids de fer, 5,5 % en poids de cérium et 0,1 % en poids de palladium.

Le substrat est ensuite imprégné par trempage dans une solution aqueuse d'acide chloroplatinique et de trichlorure de rhodium hydraté.

Les concentrations en acide chloroplatinique et en trichlorure de rhodium hydraté, sont telles que, le monolithe est imprégné par 75 mg de platine et 7,3 mg de rhodium. Après 30 minutes de contact, le monolithe est égoutté et séché à 150 °C puis activé à 400 °C pendant 3 heures dans un courant d'hydrogène de 200 litres par heure.

Le catalyseur (E) ainsi préparé contient en poids rapporté au support : 0,075 % de platine, 0,007 3 % de rhodium, 0,1 % de palladium, 0,8 % de fer et 5,5 % de cérium.

0 100 267

## Exemple 8

### Préparation d'un catalyseur (H) selon l'invention

On prépare une suspension dans l'eau d'alumine convenant au revêtement d'une structure monolithe céramique de 1,7 litre en nids d'abeilles.

Le mode opératoire utilisé pour l'imprégnation est semblable à celui décrit dans l'exemple 7. On utilise cette fois une solution aqueuse de nitrate ferrique, de nitrate de cérium, de nitrate de palladium et de nitrate de baryum dont les concentrations sont telles qu'après immersion et calcination, le monolithe contient 1,2 % en poids de fer, 4 % en poids de cérium, 0,075 % en poids de palladium et 1 % de baryum. Le substrat est ensuite imprégné par trempage dans une solution aqueuse d'acide chloroplatinique et de trichlorure de rhodium hydraté.

Le catalyseur (H) ainsi préparé contient en poids rapporté au support 0,10 % de platine, 0,007 3 % de rhodium, 0,075 % de palladium, 1,2 % de fer, 4 % de cérium et 1 % en poids de baryum.

## Exemple 9

### Activités des divers catalyseurs mesurées sur voiture selon le cycle américain CVS-CH

Le présent exemple rassemble les résultats obtenus sur voiture selon le cycle américain CVS-CH avec les divers catalyseurs (A), (B), (C), (D), (E), (F), (G) et (H) décrits respectivement dans les exemples 1 à 8.

Les conditions de ce test sont précisées dans la référence suivante : « Federal Register, Vol. 42, n° 124 — June 28, 1977, pages 32906, Title 40 Protection of Environment, Chap. 1, Environmental Protection Agency, Part 86 Central of air pollution from new-motor vehicles and new-motor vehicle engines ».

Le véhicule utilisé est une RENAULT R 17 TS équipée d'un dispositif d'injection électronique prototype BOSCH-L JETRONIC régulé par une sonde à oxygène. L'inertie de ce véhicule est de 2 750 lbs (1 250 kg). Le réglage du frein hydraulique simulant la résistance à l'avancement sur route effectué conformément à la norme fédérale américaine correspond sur le banc à rouleaux utilisé à une force de traction à la balance de 25 kg f à 80 km/h.

Les émissions de base du véhicule sans pot catalytique sont les suivantes :

CO : 12,3 g/mile
HC : 1,8 g/mile
$NO_x$ : 2,4 g/mile

Un pot catalytique expérimental de type cylindrique de volume de 1 700 cm$^3$ a été adapté sur la tubulure d'échappement à une distance d'environ 1,7 m du moteur.

Le tableau ci-après rassemble les résultats obtenus avec les divers catalyseurs (A), (B), (C), (D), (E), (F), (G) et (H) décrits respectivement dans les exemples 1 à 8.

Tableau 1 : Emissions d'oxyde de carbone (CO), d'hydrocarbures (HC) et d'oxydes d'azote ($NO_x$) mesurées sur voiture suivant le cycle américain CVS-CH et exprimées en gramme par mile.

(Voir tableau 1 p. 8)

Tableau 1

| | Numéro de l'exemple | Référence du catalyseur | Emissions après vieillissement du catalyseur sur banc moteur pendant 500 heures à 680°C | | |
|---|---|---|---|---|---|
| | | | CO | HC | NO$_x$ |
| ART ANTERIEUR | 1 | A | 5,80 | 0,73 | 1,20 |
| | 2 | B | 8,70 | 1,50 | 2,01 |
| | 3 | C | 6,15 | 0,70 | 1,10 |
| INVENTION | 4 | D | 3,12 | 0,40 | 0,53 |
| | 5 | E⁺ | 3,08 | 0,38 | 0,42 |
| | 6 | F | 3,30 | 0,37 | 0,50 |
| | 7 | G | 3,90 | 0,60 | 0,70 |
| | 8 | H | 3,20 | 0,40 | 0,55 |

Exemple 10

Préparation d'un catalyseur (J) de l'art antérieur

On prépare 100 g de billes d'alumine de structure gamma selon les procédés décrits dans les brevets français n° 1 449 904 et 1 386 364 par autoclavage en présence d'acide d'agglomérés d'alumine active, séchage et calcination.

Les billes d'alumine obtenues présentent une surface spécifique de 100 m²/g, un volume poreux total de 0,90 cm³/g et un volume de 0,40 cm³/g constitué par des macropores ayant un diamètre supérieur à 1 000 Å.

Ces billes sont imprégnées par 90 cm³ d'une solution aqueuse de nitrate céreux contenant 4,0 g de cérium. Après 30 minutes de contact, les billes sont séchées à 150 °C puis calcinées sous air à 400 °C pendant 3 heures.

Elles sont ensuite imprégnées par 90 cm³ d'une solution d'acide chloroplatinique et de nitrate de palladium contenant 100 mg de platine et 50 mg de palladium.

Après 30 minutes de contact, les billes sont séchées à 150 °C puis activées à 400 °C pendant 3 heures dans un courant d'hydrogène circulant à 200 litres par heure.

Le catalyseur (J) ainsi préparé contient en poids rapporté au support 0,100 % de platine ; 0,050 % de palladium et 4,0 % de cérium.

Exemple 11

Préparation d'un catalyseur (K) de l'art antérieur

On prépare 100 g de billes d'alumine selon le procédé décrit dans la demande de brevet européen n° 15801.

Ces billes présentent une surface spécifique de 100 m²/g, un volume poreux total de 1,20 cm³/g et un volume de 0,45 cm³/g, constitué par des macropores ayant un diamètre supérieur à 1 000 Å.

Le mode opératoire utilisé pour l'imprégnation est semblable à celui décrit dans l'exemple 10 ci-dessus. On utilise cette fois 120 cm³ d'une solution aqueuse de nitrate de lanthane contenant 3 % de lanthane puis 120 cm³ d'une solution d'acide chloroplatinique et de chlorure de palladium contenant 50 mg de platine et 100 mg de palladium.

Le catalyseur (K) ainsi préparé contient en poids rapporté au support 0,050 % de platine ; 0,100 % de palladium et 3 % de lanthane.

Exemple 12

Préparation d'un catalyseur (L) de l'art antérieur

On prépare une suspension dans l'eau d'alumine convenant au revêtement d'une structure monolithe métallique connue sous la marque Fecralloy.

Le monolithe de 0,8 litre (100 g) est plongé dans la suspension à pH = 3,5 contenant 30 % en poids d'alumine. Le support précédemment cité est égoutté et séché pour que les canaux soient vidés, puis il est calciné à 600 °C durant 3 heures. Le monolithe ainsi revêtu est immergé dans une solution aqueuse de nitrate de néodyme pendant 30 minutes, puis il est égoutté et séché à 150 °C et calciné à 400 °C durant 3 heures. La concentration en nitrate de néodyme dans la solution est telle que, après immersion et calcination, le monolithe contient 4,5 % en poids de néodyme.

Le substrat est ensuite imprégné par trempage dans une solution aqueuse d'acide chloroplatinique et de chlorure de palladium.

Les concentrations en acide chloroplatinique et en chlorure de palladium sont telles que, le monolithe est imprégné par 750 mg de platine et 750 mg de palladium. Après 30 minutes de contact, le monolithe est égoutté et séché à 150 °C puis activé à 400 °C pendant 3 heures dans un courant d'hydrogène de 200 litres par heure.

Le catalyseur (L) ainsi préparé contient en poids rapporté au support : 0,075 % de platine ; 0,75 % de palladium et 4,5 % de néodyme.

Exemple 13

Préparation d'un catalyseur (M) selon l'invention

100 g de billes d'alumine tel que décrit à l'exemple 10 sont imprégnés par 90 cm³ d'une solution aqueuse de nitrate de fer, de nitrate de cérium et de nitrate de palladium contenant 1,0 g de fer, 4 g de cérium et 0,100 g de palladium.

Après 30 minutes de contact, les billes sont séchées à 150 °C puis calcinées sous air à 400 °C pendant 3 heures. Elles sont ensuite imprégnées par 90 cm³ d'une solution d'acide chloroplatinique contenant 50 mg de platine.

Après 30 minutes de contact, les billes sont séchées à 150 °C puis activées à 400 °C pendant 3 heures dans un courant d'hydrogène de 200 litres par heure.

Le catalyseur (M) ainsi préparé contient en poids rapporté au support 0,050 % de platine ; 0,100 % de palladium ; 1,0 % de fer et 4 % de cérium.

Exemple 14

Préparation d'un catalyseur (N) selon l'invention

100 g de billes d'alumine tel que décrit à l'exemple 11 sont imprégnés par 120 cm³ d'une solution aqueuse de nitrate de fer, de nitrate de cérium, de nitrate de magnésium et de chlorure de palladium contenant 1,5 g de fer, 3,5 g de cérium, 1 g de magnésium et 0,075 g de palladium.

Après 30 minutes de contact les billes sont séchées à 150 °C puis calcinées sous air à 400 °C pendant 3 heures. Elles sont ensuite imprégnées par 120 cm³ d'une solution d'acide chloroplatinique contenant 0,075 g de platine. Les billes sont ensuite traitées comme à l'exemple 13.

Le catalyseur (N) ainsi préparé contient en poids rapporté au support 0,075 % de platine ; 0,075 % de palladium, 1,5 % de fer, 3,5 % de cérium et 1 % de magnésium.

Exemple 15

Préparation d'un catalyseur (O) selon l'invention

On prépare 100 g de billes d'alumine de structure gamma selon les procédés décrits dans les brevets français n° 1 499 904 et 1 386 364 par autoclavage en présence d'acide d'agglomérés d'alumine active, séchage et calcination.

Le mode opératoire utilisé pour l'imprégnation est semblable à celui décrit dans l'exemple 10. On utilise cette fois 90 cm³ d'une solution aqueuse de nitrate de lanthane, de nitrate de néodyme et de nitrate de palladium contenant 2 g de lanthane, 2,0 g de néodyme et 0,100 g de palladium, puis 90 cm³ d'une solution d'acide chloroplatinique et de rhodium hydraté contenant 50 mg de platine.

Le catalyseur (O) ainsi préparé contient en poids rapporté au support 0,050 % de platine ; 0,100 % de palladium ; 2 % de lanthane et 2 % de néodyme.

9

Exemple 16

Préparation d'un catalyseur (P) selon l'invention

On prépare une suspension dans l'eau d'alumine convenant au revêtement d'une structure monolithe céramique en nids d'abeilles.

Le mode opératoire utilisé pour l'imprégnation est semblable à celui décrit dans l'exemple 8. On utilise cette fois une solution aqueuse de nitrate de lanthane et de nitrate de palladium dont les concentrations sont telles qu'après immersion et calcination, le monolithe contient 4,5 % en poids de lanthane et 0,075 % de palladium. Le substrat est ensuite imprégné par trempage dans une solution aqueuse d'acide chloroplatinique.

Le catalyseur (P) ainsi préparé contient en poids rapporté au support 0,075 % de platine, 0,075 % de palladium et 4,5 % de lanthane.

Exemple 17

Activités des divers catalyseurs mesurés au banc moteur

Le présent exemple rassemble les résultats obtenus sur banc moteur avec les catalyseurs (J), (K), (L), (M), (N), (O) et (P) décrits respectivement dans les exemples 10, 11, 12, 13, 14, 15 et 16.

Les essais ont été effectués en chargeant successivement 1 700 cm³ de chacun des catalyseurs sous forme de corps façonnés dans un réacteur de type cylindrique à circulation axiale (diamètre intérieur 18,25 cm, épaisseur du lit de catalyseur 6,5 cm). Les catalyseurs sur monolithe céramique de 1,7 litre ou sur monolithe métallique de 0,8 litre ont été placés dans un réacteur cylindrique approprié.

Le réacteur est adapté sur le circuit d'échappement d'un moteur au banc d'essai en interposant entre le moteur et le réacteur un dispositif permettant de réguler la température des gaz à 530 °C en entrée du réacteur.

Le moteur est un moteur d'automobile à essence comprenant 4 cylindres d'une cylindrée totale de 1 600 cm³ et dont le rapport volumétrique est de 8,8/litre. Il est accouplé à un frein hydraulique et fonctionne en régime stabilisé à 3 000 tours/minute en fournissant une puissance d'environ 25 kW.

D'autre part, pour que la post-combustion catalytique des imbrûlés puisse se faire sans difficulté, de l'air secondaire a été introduit dans les gaz d'échappement en amont du réacteur par un dispositif d'aspiration naturelle d'air fonctionnant avec des clapets « Pulsair ». Le débit des gaz d'échappement passant sur le catalyseur est dans ces conditions de 46 Nm³/heure et les teneurs initiales des principaux polluants sont les suivantes :

— monoxyde de carbone (CO) : 0,55 % en volume,
— hydrocarbures imbrûlés (HC) : 0,14 % en volume exprimés en équivalent méthane.

Le dosage de ces composés est effectué avant et après passage des gaz d'échappement sur le catalyseur par les techniques analytiques habituelles suivantes :

— CO : absorption infra-rouge (analyseur COSMA Rubis 3000),
— HC : analyse par ionisation de flamme (analyseur IPM).

Tableau 2

Taux d'épuration exprimé en pourcentage d'oxyde de carbone (CO) et d'hydrocarbures (HC) mesuré sur banc moteur

| Numéro de référence | Référence du catalyseur | Taux d'épuration pour un catalyseur neuf stabilisé 1 heure | | Taux d'épuration après vieillissement du catalyseur sur banc moteur pendant 800 heures | |
|---|---|---|---|---|---|
| | | CO | HC | CO | HC |
| 10 | J | 95 | 91 | 70 | 55 |
| 11 | K | 97 | 90 | 67 | 57 |
| 12 | L | 87 | 71 | 53 | 31 |
| 13 | M | 95 | 92 | 90 | 83 |
| 14 | N | 98 | 93 | 87 | 80 |
| 15 | O | 94 | 89 | 80 | 72 |
| 16 | P | 92 | 90 | 75 | 70 |

## Revendications

1. Procédé de préparation de catalyseurs pour le traitement des gaz d'échappement des moteurs à combustion interne contenant un support revêtu et/ou imprégné d'au moins deux métaux du groupe du platine dont le palladium et d'au moins un métal de base choisi parmi au moins un des métaux suivants, le silicium étant exclu : le cobalt, le zinc, le manganèse, le nickel, le tungstène, le cérium, le fer, le cuivre, le néodyme, le praséodyme, le rhénium, le chrome, le zirconium, le lanthane, l'étain, le calcium, le strontium, le baryum, l'yttrium, le magnésium, le titane, le gallium, caractérisé en ce que :

— dans une première étape, on introduit, simultanément ou non, le palladium et les métaux de base,

— dans une deuxième étape, on active,

— dans une troisième étape, on introduit les métaux précieux du groupe du platine autres que le palladium,

— dans une quatrième étape, on active le catalyseur de préférence en atmosphère réductrice.

2. Procédé selon la revendication 1, caractérisé en ce que les métaux du groupe du platine sont choisis parmi : le platine, le rhodium, le ruthénium, le palladium, l'iridium.

3. Procédé selon la revendication 2, caractérisé en ce que l'on met en œuvre le palladium et au moins un métal du groupe du platine choisi parmi le platine, l'iridium et le rhodium.

4. Procédé selon la revendication 1, caractérisé en ce que les métaux de base sont choisis de préférence dans les formulations suivantes :

— le fer et/ou le cérium,

— le manganèse et le cérium et/ou le fer,

— le cérium, le fer, le gallium et/ou l'yttrium,

— le cérium, le fer, le baryum et/ou le magnésium et/ou l'yttrium,

— le lanthane et/ou le néodyme.

5. Procédé selon la revendication 1, caractérisé en ce que, selon la première étape, on introduit le palladium et les métaux de base dans le support par imprégnation, cogélification, coprécipitation ; on opère de préférence par imprégnation du support avec une solution contenant des composés du palladium et des métaux de base.

6. Procédé selon la revendication 5, caractérisé en ce que les composés du palladium sont choisis parmi le chlorure de palladium, le nitrate de palladium, le dichlorure de palladium II tétramine.

7. Procédé selon la revendication 1, caractérisé en ce que, selon la deuxième étape, l'activation est effectuée à une température comprise entre environ 120 et 800 °C.

8. Procédé selon la revendication 1, caractérisé en ce que, selon la quatrième étape, l'activation est effectuée à une température comprise entre 300 et 800 °C.

## Claims

1. Process for the preparation of catalysts for the treatment of internal combustion engine exhaust gases, containing a support coated and/or impregnated with at least two platinum group metals including palladium and at least one base metal chosen from at least one of the following metals, silicon being excluded : cobalt, zinc, manganese, nickel, tungsten, cerium, iron, copper, neodymium, praseodymium, rhenium, chromium, zirconium, lanthanum, tin, calcium, strontium, barium, yttrium, magnesium, titanium and gallium, characterized in that :

in a first stage, palladium and the base metals are introduced, simultaneously or otherwise,

in a second stage, activation is carried out,

in a third stage, the platinum group precious metals other than palladium are introduced,

in a fourth stage, the catalyst is activated, preferably in a reducing atmosphere.

2. Process according to Claim 1, characterized in that the platinum group metals are chosen from : platinum, rhodium, ruthenium, palladium and iridium.

3. Process according to Claim 2, characterized in that palladium and at least one platinum group metal chosen from platinum, iridium and rhodium are used.

4. Process according to Claim 1, characterized in that the base metals are preferably chosen from the following formulations :

iron and/or cerium,

manganese and cerium and/or iron,

cerium, iron, gallium and/or yttrium,

cerium, iron, barium and/or magnesium and/or yttrium, and

lanthanum and/or neodymium.

5. Process according to Claim 1, characterized in that, in the first stage, the palladium and the base metals are introduced into the support by impregnation, cogelling or coprecipitation ; the operation is preferably carried out by impregnation of the support with a solution containing compounds of palladium and of base metals.

6. Process according to Claim 5, characterized in that the palladium compounds are chosen from palladium chloride, palladium nitrate and tetraamminepalladium (II) dichloride.

7. Process according to Claim 1, characterized in that, in the second stage, the activation is carried out at a temperature of between approximately 120 and 800 °C.

8. Process according to Claim 1, characterized in that, in the fourth stage, the activation is carried out at a temperature of between 300 and 800 °C.

## Patentansprüche

1. Verfahren zur Herstellung von Katalysatoren zur Abgasbehandlung von Verbrennungsmotoren, die einen Träger enthalten, der überzogen und/oder imprägniert ist mit wenigstens zwei Metallen aus der Platingruppe, wovon eines das Palladium ist, und mindestens einem Basismetall, das unter den folgenden Metallen ausgewählt ist, wobei das Silicium ausgeschlossen ist : Kobalt, Zink, Mangan, Nickel, Wolfram, Cer, Eisen, Kupfer, Neodym, Praseodym, Rhenium, Chrom, Zirkonium, Lanthan, Zinn, Calcium, Strontium, Barium, Yttrium, Magnesium, Titan, Gallium, dadurch gekennzeichnet,

— daß man in einer ersten Stufe gegebenenfalls gleichzeitig das Palladium und die Basismetalle einsetzt,

— daß man in einer zweiten Stufe aktiviert,

— daß man in einer dritten Stufe die anderen Edelmetalle aus der Platingruppe als das Palladium zusetzt,

— daß man in einer vierten Stufe den Katalysator vorzugsweise in reduzierender Atmosphäre aktiviert.

2. Verfahren nach Anspruch 1, dadurch gekennzeichnet, daß die Metalle aus der Platingruppe ausgewählt werden unter : Platin, Rhodium, Ruthenium, Palladium, Iridium.

3. Verfahren nach Anspruch 2, dadurch gekennzeichnet, daß man das Palladium und mindestens ein Metall aus der Platingruppe, das unter Platin, Iridium und Rhodium ausgewählt ist, einsetzt.

4. Verfahren nach Anspruch 1, dadurch gekennzeichnet, daß die Basismetalle vorzugsweise in den folgenden Formulierungen gewählt werden :

— Eisen und/oder Cer,

— Mangan und Cer und/oder Eisen,

— Cer, Eisen, Gallium und/oder Yttrium,

— Cer, Eisen, Barium und/oder Magnesium und/oder Yttrium,

— Lanthan und/oder Neodym.

5. Verfahren nach Anspruch 1, dadurch gekennzeichnet, daß man gemäß der ersten Stufe das Palladium und die Basismetalle in den Träger einführt durch Imprägnierung, Cogelifizierung, Mitfällung, wobei vorzugsweise der Träger mit einer Lösung imprägniert wird, die Verbindungen von Palladium und der Basismetalle enthält.

6. Verfahren nach Anspruch 5, dadurch gekennzeichnet, daß die Verbindungen des Palladiums ausgewählt werden unter Palladiumchlorid, Palladiumnitrat, Palladium(II)-tetrammindichlorid.

7. Verfahren nach Anspruch 1, dadurch gekennzeichnet, daß die Aktivierung gemäß der zweiten Stufe bei einer Temperatur zwischen etwa 120 und 800 °C ausgeführt wird.

8. Verfahren nach Anspruch 1, dadurch gekennzeichnet, daß die Aktivierung gemäß der vierten Stufe bei einer Temperatur zwischen 300 und 800 °C ausgeführt wird.